(19) **Europäisches Patentamt European Patent Office Office européen des brevets**

(11) **EP 1 959 578 A2**

(12) **EUROPEAN PATENT APPLICATION**

(43) Date of publication:
20.08.2008 Bulletin 2008/34

(51) Int Cl.:
*H04B 1/40* (2006.01)  *G06K 19/07* (2006.01)

(21) Application number: 08250518.1

(22) Date of filing: 13.02.2008

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(30) Priority: 14.02.2007 JP 2007033977

(71) Applicant: OMRON CORPORATION
Kyoto-shi,  Kyoto 600-8530 (JP)

(72) Inventor: **Kawai, Takehiro**
**Shimogyo-ku**
**Kyoto-shi**
**Kyoto 600-8530 (JP)**

(74) Representative: **Calderbank, Thomas Roger et al**
**MEWBURN ELLIS**
**York House**
**23 Kingsway**
**London WC2B 6HP (GB)**

(54) **Frequency switcher, RFID system and distance measuring apparatus incorporating the frequency switcher**

(57)    A modulator is operable to modulate a carrier wave with quadrature signals including a Sin signal and a Cos signal which serve as an I signal and a Q signal. A frequency controller is operable to control frequencies of the quadrature signals to switch a transmission frequency of the carrier wave. A transmitter is operable to transmit the modulated carrier wave with the switched transmission frequency.

## FIG. 1

EP 1 959 578 A2

**Description**

The present invention relates to, in a radio communication apparatus that converts a carrier wave on the basis of baseband signals of I phase and Q phase and transmits the converted signals like PSK (Phase Shift Keying) modulation, a frequency switcher for switching the transmission frequency, an RFID system and a distance measuring apparatus incorporating such a frequency switcher.

An RFID system communicates between an RFID reader/writer that is a kind of radio communication apparatus and RFID tags has been widely used, In an UHF band RFID system, it is necessary to employ a so-called frequency hopping, that is, a transmission frequency is converted according to a prescribed rule at a high speed to perform communication, in order to prevent wave interference.

In order to realize the frequency hopping, in the conventional RFID reader/writer, a PLL (Phase Locked Loop) circuit has been used as a transmitter therein to change a frequency setting value of the PLL circuit, thereby switching a transmission frequency (see PCT Publication No. 2006/095463, for example).

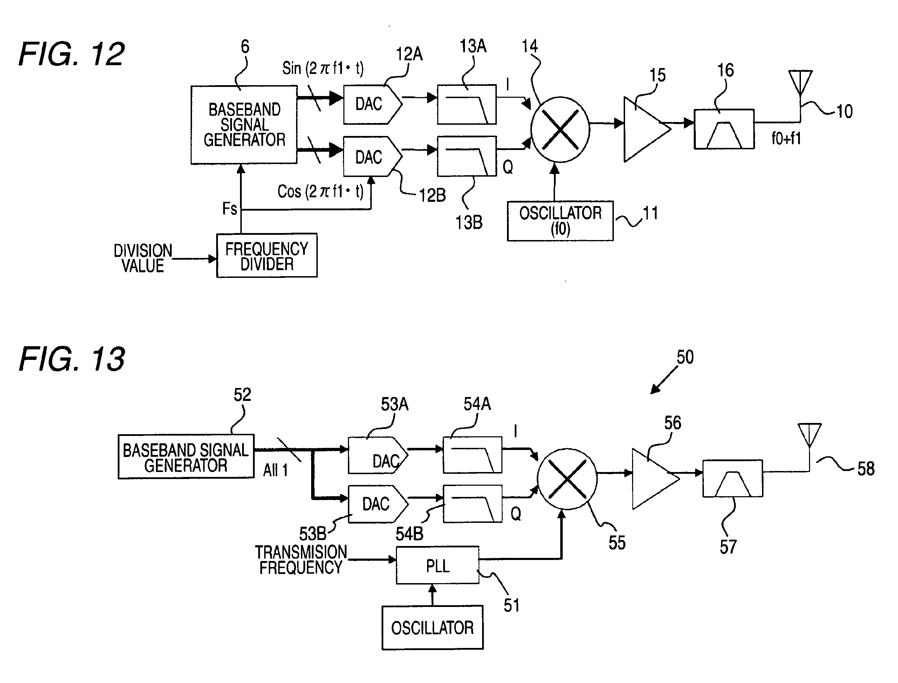

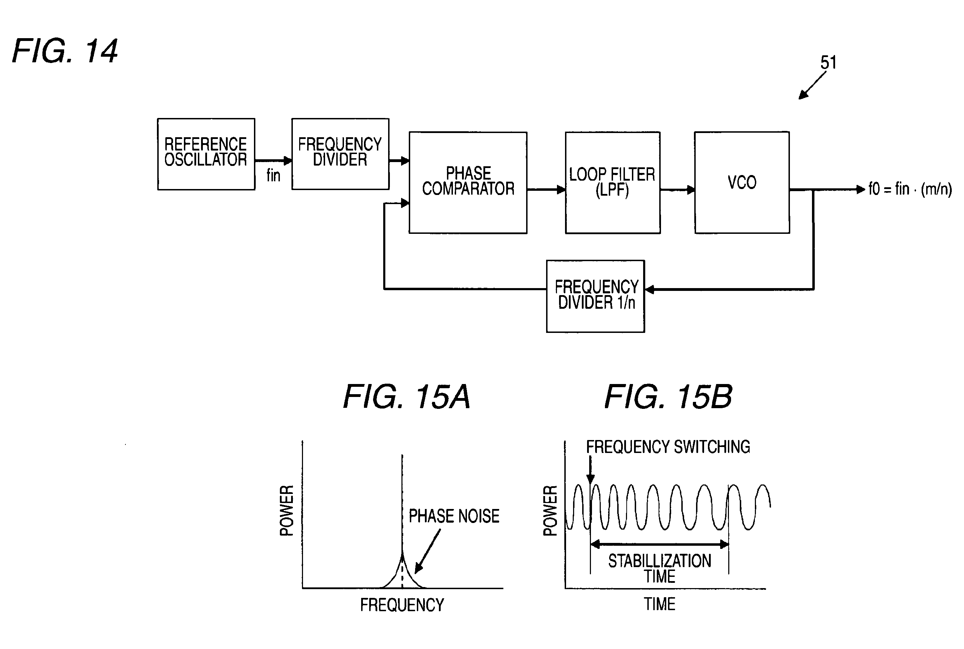

Fig. 13 is a diagram illustrating a transmission circuit of the conventional RFID reader/writer using a PLL circuit, and Fig. 14 is a circuit diagram illustrating a general PLL circuit.

In a transmission circuit 50 shown in Fig. 13, a PLL circuit 51 (see Fig. 14) can variably set a transmission frequency by a VOC (Voltage Control Oscillator), and the PLL circuit outputs a carrier wave of the set frequency. A baseband signal generator 52 generates I phase and Q phase baseband signals (hereinafter, I phase baseband signal is referred to as "I signal", and Q phase baseband signal is referred to as "Q signal") in the I-Q plane from a digital data stream.

In case of an RFID system using batteryless RFID tags, the I signal and the Q signal generated by the baseband signal generator 52 are changed according to a communication protocol of the RFID reader/writer and the RFID tag.

That is, when it is requested to transmit a response signal from the RFID tag (hereinafter, referred to as "tag response signal"), an I signal and a Q signal are generated from a digital data stream of an R/W request signal such as "001011". Meanwhile, when the tag response signal is received from the RFID tag, an I signal and a Q signal are generated from a digital data stream such as "111111" for forming a CW signal of a continuous carrier wave because only electric power to the RFID tag is supplied. That is, at the time of receiving the tag response signal, all of the I signal and the Q signal generated by the baseband signal generator 52 becomes 1 (ALL 1).

The carrier wave output from the PLL circuit 51 is input to a quadrature mixer 55. The I signal and the Q signal generated by the baseband signal generator 52 are converted into analog signals by D/A converters 53A and 53B, the signals pass through low pass filters 54A and 54B, respectively, and then the signals are input to the quadrature mixer 55.

In the quadrature mixer 55, the carrier wave is modulated on the basis of an I signal and a Q signal, the modulated signals pass through an amplifier 56 and a band pass filter 57, and the signals are transmitted from a transmission antenna 58.

In the conventional RFID reader/writer 50 with the aforementioned configuration, in case of switching the frequency of the transmission signal (transmission frequency), the setting of the transmission frequency is changed by the VOC (see Fig. 14) of the PLL circuit 51. Accordingly, the frequency of the carrier wave output from the PLL circuit 51 is changed and thus the transmission frequency is converted into the changed frequency.

The PLL circuit 51 has an advantage capable of digitally setting the transmission frequency. However, as shown in Fig. 14, the PLL circuit 51 is formed of a feedback circuit including a VCO, a frequency divider, a phase comparator, and a loop filter. Therefore, according to the conventional RFID reader/writer 50 using the PLL circuit 51, there are a problem that it takes time to stabilize the transmission frequency (see Fig. 15B) and a problem that a phase noise occurs (see Fig. 15A), which are in trade-off relation. Therefore, it is difficult to accomplish both of an object to convert the transmission frequency at a high speed for the frequency hopping and an object to perform a communication with a few phase noise.

That is, in the PLL circuit 51 shown in Fig. 14, when a time constant of the loop filter is made large, the phase noise becomes small. However, since a loop time becomes long, a stabilization time to stabilize the transmission becomes long and it is difficult to convert the transmission frequency at a high speed. Alternatively, when the time constant of the loop filter is made small, the loop time becomes short. Accordingly, it is possible to convert the transmission at a high speed, but the phase noise becomes large and thus it is difficult to perform the communication with less phase noise.

It is conceivable a method in which phase-noise canceling circuits are used as means for reducing such a phase noise, but this method has a problem that a circuit configuration becomes complex as much as the used canceling circuits.

It is therefore an advantageous aspect of the invention to provide a frequency switcher capable of achieving both of the high-speed switching and the communication with less phase noise while using a simple configuration.

It is also an advantageous aspect of the invention to provide an RFID system and a distance measuring apparatus incorporating such a frequency switcher.

According to one aspect of the invention, there is provided a frequency switcher, comprising:

a modulator, operable to modulate a carrier wave with quadrature signals including a Sin signal and a Cos signal which serve as an I signal and a Q signal;

a frequency controller, operable to control frequencies of the quadrature signals to switch a transmission frequency of the carrier wave; and

a transmitter, operable to transmit the modulated carrier wave with the switched transmission frequency.

The "I signal and Q signal" are signals obtained by dividing a baseband signal by I phase and Q phase baseband signals in the I-Q plane.

The "quadrature signals" may include combination of $+\mathrm{Sin}(2\pi f1\cdot t)$ and $+\mathrm{Cos}(2\pi f1\cdot t)$ and combination of $-\mathrm{Sin}(2\pi f1\cdot t)$ and $+\mathrm{Cos}(2\pi f1\cdot t)$. In this case, "f1" denotes a frequency and "t" denotes a time.

The frequency switcher may further comprise an I-Q signal table, storing a plurality of data sets each of which includes I signal data and Q signal data which are configured to be used to generate the I signal and the Q signal of an associated one of a plurality of transmission frequencies. The frequency controller may be operable to switch the data sets in order to switch the transmission frequency.

The frequency switcher may further comprise: a first table, storing data for generating the Sin signal; and a second table, storing data for generating the Cos signal. The frequency controller may be operable to generate a sampling frequency for sampling the Sin signal and the Cos signal, and operable to switch the sampling frequency in order to switch the transmission frequency.

The frequency controller may include a low-frequency PLL circuit.

The frequency controller may include a frequency divider.

According to one aspect of the invention, there is also provided an RFID system, comprising:

an RFID tag; and
a reader/writer, comprising:

a modulator, operable to modulate a carrier wave with quadrature signals including a Sin signal and a Cos signal which serve as an I signal and a Q signal;

a frequency controller, operable to control frequencies of the quadrature signals to switch a transmission frequency of the carrier wave; and

a transmitter, operable to transmit, to the RFID tag, the modulated carrier wave with the switched transmission frequency.

The frequency controller may be operable to switch the transmission frequency for each of a single communication frame for transmitting a read/write request signal and a CW signal associated with one transmission frequency.

The frequency controller may be operable to switch the transmission frequency within a single communication frame for transmitting a read/write request signal and CW signals associated with switched transmission frequencies.

According to one aspect of the invention, there is also provided an RFID system, comprising:

an RFID tag; and
a reader/writer, comprising:

a modulator, operable to modulate a carrier wave with quadrature signals including a Sin signal and a Cos signal which serve as an I signal and a Q signal;

a frequency controller, operable to control frequencies of the quadrature signals to switch a transmission frequency of the carrier wave between a first frequency and a second frequency;

a transmitter, operable to transmit, to the RFID tag, the modulated carrier wave with the switched transmission frequency;

a first receiver, operable to acquire a first phase shift amount of a first response signal which is transmitted from the RFID tag in response to the modulated carrier wave having the first frequency;

a second receiver, operable to acquire a second phase shift amount of a second response signal which is transmitted from the RFID tag in response to the modulated carrier wave having the second frequency; and

a distance calculator, operable to calculate a distance between the reader/writer and the RFID tag with reference to the first frequency, the second frequency, the first phase shift amount and the second phase shift amount.

The frequency controller may be operable to switch the transmission frequency for each of a single communication frame for transmitting a read/write request signal and a CW signal associated with either the first frequency or the second frequency.

The frequency controller may be operable to switch the transmission frequency within a single communication frame for transmitting a read/write request signal and CW signals associated with the first frequency and the second frequency.

With the above configurations, even when the transmission frequency is switched at a high speed, phase noise does not increase in comparison with a case where the frequency switching is performed by using the PLL circuit. Therefore, it is possible to provide the frequency switcher and the RFID system capable of achieving both of the high-speed switching of the transmission frequencies and the communication with less phase noise. In addition, it is possible to simplify the configuration because the provision of the phase noise canceling circuit is not necessary.

IN THE DRAWINGS:

Fig. 1 is a block diagram showing an RFID system according to one embodiment of the invention.

Fig. 2 is a diagram for explaining channel frequencies available in a UHF band RFID system.

Fig. 3 is a diagram for explaining a quadrature mixer in the RFID system of Fig. 1.

Fig. 4A is a diagram for explaining a communication frame.

Fig. 4B is a diagram for explaining a tag response signal.

Fig. 5 is a flowchart showing distance measurement processing in which an R/W request signal is transmitted twice by using the communication frame of Fig. 4A and a transmission frequency of a CW signal subsequent to the R/W request signal is changed.

Fig. 6 is a flowchart showing distance measurement processing in which a transmission frequency is changed within a single communication frame.

Fig. 7A is a flowchart showing processing performed in a transmitter of an RFID reader/writer in the RFID system of Fig. 1.

Fig. 7B is a flowchart showing processing performed in a receiver in the RFID reader/writer.

Fig. 8A shows an example of an I-Q signal table.

Fig. 8B is a diagram showing a state that a Sin waveform and a Cos waveform are sampled with a prescribed sampling frequency.

Fig. 9 is a flowchart showing processing for generating an I signal and a Q signal composed of quadrature signals $Sin(2\pi f1 \cdot t)$ and $Cos(2\pi f1 \cdot t)$ having a frequency f1 by using the I-Q signal table of Fig. 8A.

Fig. 10A is a diagram for explaining processing in which a Sin signal table for outputting a Sin signal and a Cos signal table for outputting a Cos signal are used and a sampling frequency is changed.

Figs. 10B and 10C are diagrams for explaining states that the Sin signal and the Cos signal are sampled with different sampling frequencies.

Fig. 11 is a block diagram for explaining a method in which a sampling frequency is generated and changed by using a low-frequency PLL circuit.

Fig. 12 is a block diagram for explaining a method in which a sampling frequency is generated and changed by using a frequency dividing circuit.

Fig. 13 is a circuit diagram showing a transmission circuit in a conventional RFID reader/writer.

Fig. 14 is a circuit diagram showing a PLL circuit in the transmission circuit of Fig. 13.

Figs. 15A and 15B are diagrams for explaining problems related to phase noise and stabilization time of transmission frequency.

Exemplary embodiments of the invention will be described below in detail with reference to the accompanying drawings.

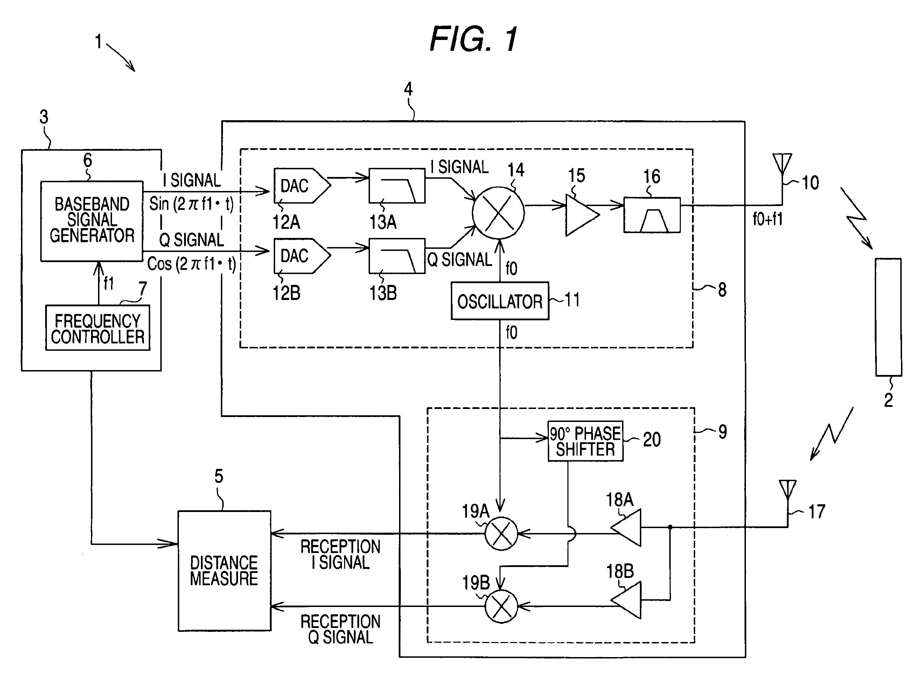

Fig. 1 shows an RFID system according to one embodiment of the invention which performs data communications between an RFID reader/writer 1 serving as a radio communication apparatus and an RFID tag 2.

The RFID tag 2 is provided with a radio communication IC, a memory, and an antenna for radio communication with the RFID reader/writer through radio waves. As such a kind of RFID tag 2, a passive type tag is used. The passive type tag has no power supply such as a battery, and a circuit thereof is operated by an electric power supplied from the RFID reader/writer 1 by radio wave to communicate with the RFID reader/writer 1 by radio.

The RFID reader/writer 1 includes a communication controller 3, a communicator 4, and a distance measure 5.

The communication controller 3 is provided with a baseband signal generator 6 and a frequency controller 7, and further provided with a hardware source and a software source (not shown) for instructing the distance measure 5 to start processing.

The baseband signal generator 6 generates an I signal and a Q signal (I phase and Q phase baseband signals in the I-Q plane) and outputs the signals to a transmitter 8. The output I signal and Q signal are changed according to a communication protocol between the RFID reader/writer 1 and the RFID tag 2.

That is, when it is requested to transmit a tag response signal from the RFID tag 2, an I signal and a Q signal are generated from a digital data stream of an R/W request signal such as "001011". Meanwhile, when the tag response signal is received from the RFID tag 2, a quadrature signals such as a Sin signal, and a Cos signal, and the like is generated and output as the I signal and the Q signal, in order to transmit a CW signal of a continuous carrier wave for the purpose of supplying power to the RFID tag 2. In the embodiment, as an example of such a quadrature signals, Sin $(2\pi f1 \cdot t)$ and Cos$(2\pi f1 \cdot t)$ are employed, but is not limited thereto.

The frequency controller 7 controls a frequency, for example, sets a frequency (f1) of the aforementioned quadrature signals or changes the setting.

The communicator 4 includes the transmitter for transmitting radio waves to the RFID tag 2 and a receiver 9 for receiving radio waves from the RFID tag 2.

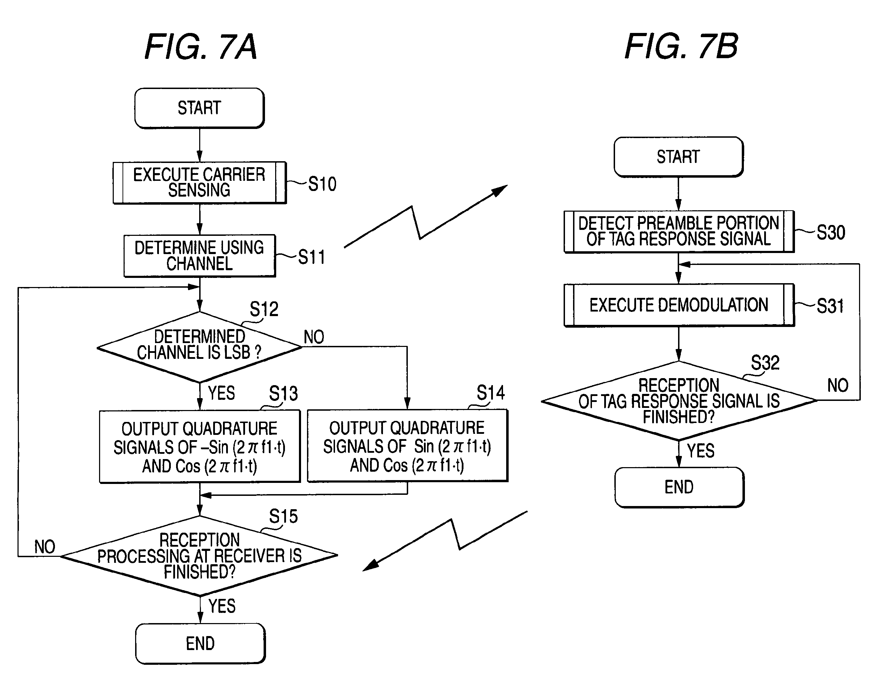

The transmitter 8 is provided with a transmission circuit including an oscillator 11, D/A converters 12A and 12B, low pass filters 13A and 13B, and a quadrature mixer 14, and an amplifier 15, and a band pass filter 16. The transmitter 8 performs processing shown in Fig. 7A, processing of modulating carrier waves on the basis of an I signal and a Q signal, and processing of amplifying the modulated signal to output the signal from the transmission antenna 10.

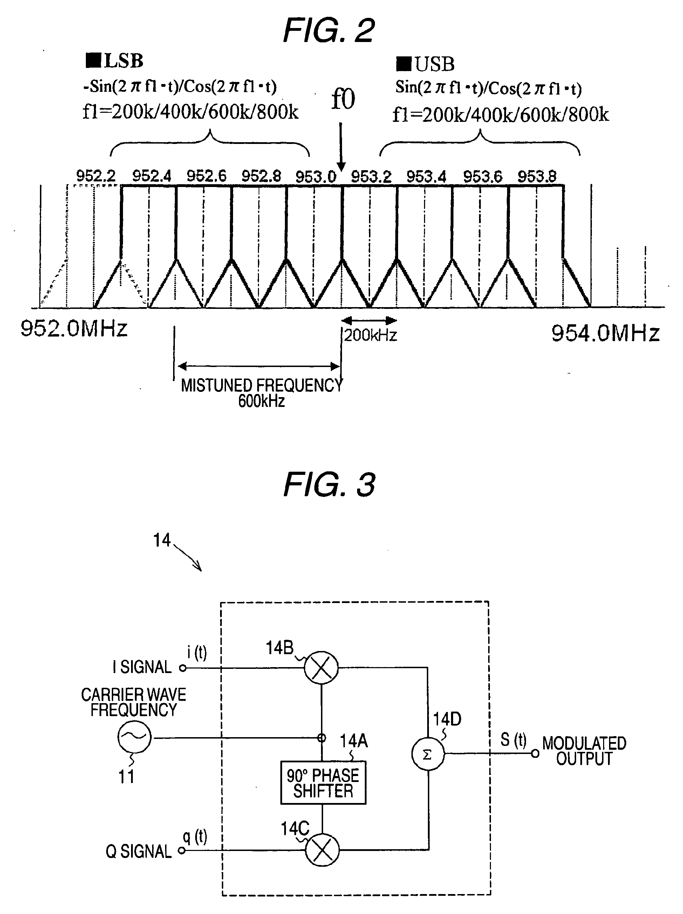

The oscillator 11 outputs a carrier wave of a frequency (f0). As shown in Fig. 2, the frequency (f0) of the carrier wave is a frequency f0 of a channel usable in the RFID system.

The carrier wave of the frequency (f0) output from the oscillator 11 is input to the quadrature mixer 14. The I signal and the Q signal generated by and output from the signal generator 6 are converted into analog signals by the D/A converters 12A and 12B, the signals pass through the low pass filters 13A and 13B, respectively, and then the signals are also input to the quadrature mixer 14.

The quadrature mixer 14 modulates the carrier wave of the frequency (f0) on the basis of an I signal and a Q signal, the modulated signals pass through the amplifier 15 and the band pass filter 16, and then the signals are transmitted from the transmission antenna 10.

The modulation in the quadrature mixer 14 is an operation processing in which each of the I signal and the Q signal is multiplied by the carrier wave of the frequency (f0) and the multiplication result is added. The operation processing of the modulation may be embodied, for example, by the quadrature mixer 14 having a configuration shown in Fig. 3.

In the quadrature mixer 14 shown in Fig. 3, a phase shifter 14A thereof shifts a phase of the carrier wave of the frequency (f0) output from the oscillator 11 by 90°. In addition, a first multiplier 14B multiplies the carrier wave of the frequency (f0) output from the oscillator 11 by the I signal. A second multiplier 14C multiplies the carrier wave of the frequency (f0), the phase of which is shifted by the phase shifter 14A as described above, by the Q signal. An adder 14D adds the multiplication result output from each of the multipliers 14B and 14C.

In the quadrature mixer 14 having the aforementioned configuration, when quadrature signals of a frequency (f1) such as Sin$(2\pi f1 \cdot t)$ and Cos$(2\pi f1 \cdot t)$ are input as the I signal and the Q signal, an operation on the left side of the following Equation 1 is performed. As a result of the operation, a Sin signal of a frequency (f0+f1) is generated by the quadrature mixer 14 as shown on the right side of the following Equation 1.

$$\mathrm{Cos}(2\pi f0 \cdot t) \cdot \mathrm{Cos}(2\pi f1 \cdot t) + \mathrm{Sin}(2\pi f0 \cdot t) \cdot \mathrm{Sin}(2\pi f1 \cdot t) = \mathrm{Sin}(2\pi f0 \cdot t + 2\pi f1 \cdot t) \quad (1)$$

When quadrature signals of a frequency (f1) such as -Sin$(2\pi f1 \cdot t)$ and Cos$(2\pi f1 \cdot t)$ are input as the I signal and the Q signal, an operation on the left side of the following Equation 2 is performed. As a result of the operation, a Sin signal of a frequency (f0-f1) is generated by the quadrature mixer 14 as shown on the right side of the following Equation 2.

$$\mathrm{Cos}(2\pi f0 \cdot t) \cdot \mathrm{Cos}(2\pi f1 \cdot t) - \mathrm{Sin}(2\pi f0 \cdot t) \cdot \mathrm{Sin}(2\pi f1 \cdot t) = \mathrm{Sin}(2\pi f0 \cdot t - 2\pi f1 \cdot t) \quad (2)$$

In short, in the RFID reader/writer 1 according to the embodiment, when the quadrature signals of the frequency (f1) such as Sin$(2\pi f1 \cdot t)$ and Cos$(2\pi f1 \cdot t)$ or -Sin$(2\pi f1 \cdot t)$ and Cos$(2\pi f1 \cdot t)$ as the I signal and the Q signal are input to the quadrature mixer 14, the carrier wave of the frequency (f0) is modulated according to the I signal and the Q signal; the carrier wave of the frequency (f0+f1) or (f0-f1) is obtained as the modulated signal; and the transmission signal of the frequency (f0+f1) or (f0-f1) is output from the transmission antenna 10. At this time, the transmission frequency of the RFID reader/writer 1 is (f0+f1) or (f0-f1). The setting of the frequency (f1) of the quadrature signals is changed by the frequency controller 7, thereby switching the transmission frequency of the RFID reader/writer 1 into another transmission frequency.

For example, in a case where the RFID reader/writer 1 according to the embodiment is used in Japan, from the relation with the domestic radio law, the frequency (f0) of the oscillator 11 is fixed to 953.1 MHz, and as the frequency (f1) of the quadrature signals input as the I signal and the Q signal, the frequency controller 7 selects any one of 200 kHz, 400 kHz, 600 kHz, or 800 kHz and sequentially sets the frequency.

With such a configuration, it is possible to generate a transmission frequency usable in the RFID system as shown in Fig. 2, and it is possible to easily embody the frequency hopping to convert the transmission frequency of the RFID reader/writer 1 at a high speed, in which the PLL circuit is not necessary. In a case where the RFID system is used in the foreign country, from the relation with the radio law of the country, the frequency (f0) of the oscillator 11 and the frequency (f1) of the quadrature signals are appropriately changed.

The receiver 9 is provided with a reception circuit including two sets of amplifiers 18A and 18B, and mixers 19A and 19B. The receiver 9 performs processings of amplification and demodulation of a tag response signal such as a reception signal received by the reception antenna 17, and further has a function of detecting a preamble portion of the tag response signal.

The tag response signal received by the reception antenna 17 is divided into two paths, and the divided signals are input to the mixers 19A and 19B through the amplifiers 18A and 18B, respectively.

In one mixer 19A, a carrier wave of a frequency (f0) is input from the oscillator 11, the carrier wave is multiplied by the tag response signals (reception signal) from the amplifier 18A to generate an I phase reception signal (hereinafter, referred to as "reception I signal"), and the reception I signal is output to the distance measure 5.

In the other mixer 19B, a carrier wave in which a phase of the carrier wave of the frequency (f0) output from the oscillator 11 is shifted by a phase shifter 20 by 90° is input, the 90° phase shifted carrier wave is multiplied by the tag response signal (reception signal) output from the amplifier 18B to generate a Q phase reception signal (hereinafter, referred to as "reception Q signal), and the reception Q signal is output to the distance measure 5.

The distance measure 5 performs processing of calculating a distance from the RFID reader/writer 1 to the RFID tag 2 on the basis of the tag response signal (reception signal) received from the RFID tag 2. In the embodiment, the distance is calculated on the basis of the reception I signal and the reception Q signal input from the two mixers 19A and 19B. Specificahy, the calculation is performed as follows.

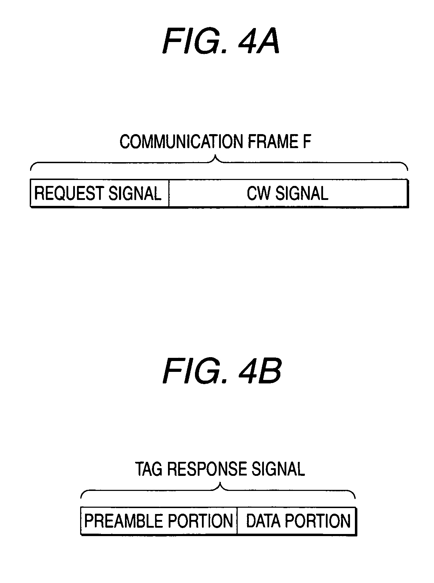

For example, as shown in Fig. 4A, it is assumed that the RFID reader/writer 1 communicates with the RFID tag 2, using a communication frame F including an R/W request signal and a subsequent CW signal.

In addition, the RFID reader/writer 1 transmits the R/W request signal twice using the communication frame F, and transmission frequencies of the CW signal following each of the R/W request signals are made different such as f1 and f2.

That is, the RFID reader/writer 1 transmits the subsequent CW signal at the first transmission frequency f1 when transmitting the first R/W request signal, and transmits the subsequent CW signal at the second transmission frequency f2 different from the first frequency f1 when transmitting the second R/W request signal.

In the RFID tag 2, when the first R/W request signal is received, the tag response signal shown in Fig. 4B is replied at the frequency of the subsequently received CW signal, that is, the first transmission frequency f1. When the second R/W request signal is received, the tag response signal shown in the same figure B is replied at the frequency of the subsequently received CW signal, that is, the second transmission frequency f2. The tag response signal is composed of a preamble portion and a data portion as shown in the Fig. 4B.

Under the preconditions, assuming that a going and returning distance from the reception antenna 17 of the RFID reader/writer 1 to the RFID tag 2 is 2r, a signal transmitted through the going and returning distance 2r, that is, the reception signal (tag response signal) from the RFID tag 2 is represented by the following Equation, assuming that the first transmission frequency is f1.

$$s1(t) = D(t) \cdot A\sin(2\pi f1 \cdot t + \phi1) \qquad (3)$$

In the above Equation, t is time, s1 (t) denotes a signal transmitted at the first transmission frequency f1, D(t) denotes a baseband signal, A denotes an amplitude of the carrier signal itself, $\phi1$ denotes a variation in phase according to the transmission of the signal through the going and returning distance 2r.

Assuming that the reception I signal generated by the first mixer 19A is I1(t) and the reception Q signal generated by the second mixer 19B is Q1(t), I1(t) and Q1(t) are represented by the following Equations, respectively.

$$I1(t) = D(t) \cdot A\sin(2\pi f1 \cdot t + \phi1) \cdot \sin(2\pi f1 \cdot t) \rightarrow D(t) \cdot A\cos\phi1 \qquad (4)$$

$$Q1(t) = D(t) \cdot A\sin(2\pi f1 \cdot t + \phi1) \cdot \cos(2\pi f1 \cdot t) \rightarrow D(t) \cdot A\sin\phi1 \qquad (5)$$

From above, on the basis of the reception I signal and the reception Q signal, the phase shift amount $\phi1$ in the signal of the first transmission frequency f1 can be obtained by the following Equation.

$$\phi1 = \tan^{-1}[Q1(t)/I1(t)] \qquad (6)$$

Similarly, on the basis of the reception I signal and the reception Q signal, the phase shift amount $\phi2$ in the signal of the second transmission frequency f2 can be obtained by the following Equation.

$$\phi2 = \tan^{-1}[Q2(t)/I2(t)] \qquad (7)$$

As described the above, the distance measure 5 acquires the variations $\phi1$ and $\phi2$ in the signals of the transmission frequencies f1 and f2 from the reception I signal and the reception Q signal. The distance measure 5 calculates a distance "r" from the reception antenna 17 of the RFID reader/writer 1 to the RFID tag 2 on the basis of the variations $\phi1$ and $\phi2$ using the following Equation.

$$r = c \cdot \Delta\phi / [4\pi|f1\text{-}f2|] \quad \text{(here, } \Delta\phi = \phi1\text{-}\phi2) \qquad (8)$$

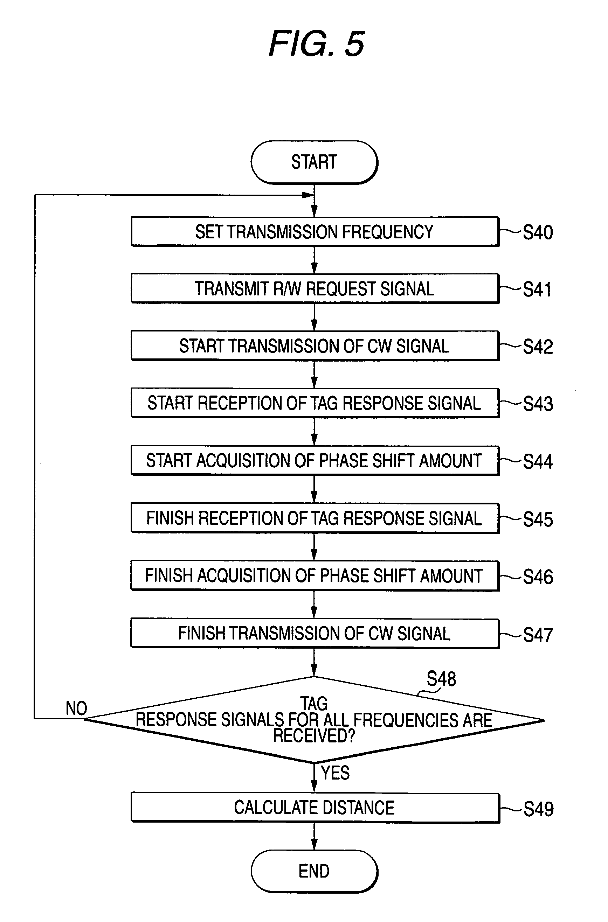

Fig. 5 is a flowchart illustrating processing of distance measurement in a manner that the R/W request signals are transmitted twice using the communication frame F shown in Fig. 4A, and the transmission frequencies of the CW signals following the R/W request signals are made different from each other such as f1 and f2. Hereinafter, processing according to the present manner will be described with reference to the flowchart.

In the following description of the process, for convenience sake of the description, it is assumed that the frequency f1 of the quadrature signals generated by the baseband signal generator 6 includes different frequencies (f11) and (f12).

It is assumed that the first transmission frequency f1 is the frequency (f0+f11) obtained by adding the frequency (f0) of the oscillator 11 and the frequency (f11) of the quadrature signals, and the second transmission frequency f2 is the frequency (f0+f12) obtained by adding the frequency (f0) of the oscillator 11 and the frequency (f12) of the quadrature signals.

Starting the distance measuring processing according to the present manner, the frequency controller 7 sets the frequency (f11) of the quadrature signals to the baseband signal generator 6 (Step S40).

Then, the baseband signal generator 6 generates an I signal and a Q signal from the digital data streams of the R/W request signal, the generated I signal and Q signal pass through the D/A converters 12A and 12B and the low pass filters 13A and 13B, respectively, and the signals are input to the quadrature mixer 14. The signals obtained by modulating the carrier wave on the basis of the input I signal and the Q signal, that is, the R/W request signals pass from the quadrature mixer 14 through the amplifier 15 and the band pass filter 16 and are transmitted from the transmission antenna 10 to the outside (Step S41).

Subsequently, the baseband signal generator 6 generates $\text{Sin}(2\pi f11 \cdot t)$ and $\text{Cos}(2\pi f11 \cdot t)$ as quadrature signals having the set frequency (f11), and the quadrature signals of the frequency (f11) are similarly input to the quadrature mixer 14 as the I signal and the Q signal. The signals obtained by modulating the carrier wave of the frequency (f0) on the basis of the input I signal and the Q signal, that is, the C/W signals of the first transmission frequency such as (f0+f11) are similarly transmitted from the transmission antenna 10 to the outside (Step S42).

The RFID tag 2 receives the R/W Request signal transmitted as described above, and the RFID tag 2 replies the tag response signal at the transmission frequency (f0+f11) of the subsequently received CW signal.

Meanwhile, in the RFID reader/writer 1, the tag response signal of the first transmission frequency (f0+f11) is received by the transmission antenna 17, the tag response signal is input to the receiver 9, and the receiver 9 generates a reception I signal and a reception Q signal from the input tag response signal (reception signal) (Step S43).

The distance measure 5 acquires a phase shift amount $\phi 1$ of the signal of the first transmission frequency (f0+f11), on the basis of the reception I signal, the reception Q signal, and Equation 6 (Step S44).

Then, in the RFID reader/writer 1, the reception processing of the tag response signal is finished (Step S45), the acquiring processing of the phase shift amount is finished (Step S46), the transmission of the CW signal at the first frequency (f0+f11) is stopped (Step S47), and the communication according to the one communication frame is finished.

Next, the communication controller 3 determines whether the tag response signals of all frequencies to be received such as tag response signals of two frequencies (f0+f11) and (f0+f12) in the example have been all received or not (Step S48).

In Step S48, it is determined that all of the tag response signals are received, the distance measure 5 calculates a distance "r" from Equation 7, the phase shift amount $\phi 1$ of the signal of the first transmission frequency (f0+f11), and the phase shift amount $\phi 2$ of the signal of the second transmission frequency (f0+f12), on the basis of the instruction of the processing start from the communication controller 3 (Step S48: Yes, and Step S49).

In Step S48, it is determined that all of the tag response signals are not received, the processing returns to Step S40 (Step S48: No) and necessary phase shift amounts are acquired because all necessary phase shift amounts for calculating the distance "r" on the basis of Equation 7 are not acquired.

That is, in Step S40 returning from Step S48, the frequency controller 7 sets the frequency of the non-received tag response signal to the baseband signal generator 6. In the above processings, the tag response signal of the frequency (f11) is received, but the tag response signal of the frequency (f12) is not received. Accordingly, the frequency (f12) is set to the baseband signal generator 6 and the quadrature signals of the frequency (f12) is input to the quadrature mixer 14. For this reason, the frequency generated by modulating the carrier wave of the frequency (f0) on the basis of the input 1 signal and Q signal becomes the second frequency such as (f0+f12).

Accordingly, the CW signal of the second transmission frequency (f0+f12) described in Step S42 is transmitted from the transmission antenna 10 of the RFID reader/writer 1, following the second R/W request signal transmitted in Step S41. The RFID tag 2 receiving the CW signal of the second transmission frequency (f0+f12) replies the tag response signal at the second transmission frequency (f0+f12).

The RFID reader/writer 1 receiving the tag response signal of the second transmission frequency (f0+f12) generates reception I signal and reception Q signal from the tag response signal (reception signal) in Step S44 and the RFID reader/writer 1 acquires phase shift amount $\phi 2$ of the second transmission frequency (f0+f12) on the basis of the reception I signal, the reception Q signal, and Equation 6.

In the above description, the R/W request signal is transmitted twice by the communication frame shown in Fig. 4A, and the transmission frequency of the CW signal following each R/W request signal is set differently such as (f0+f11) and (f0+f12), thereby measuring the distance. However, the transmission frequency of the CW signal may be converted into different frequency such as (f0+f11) and (f0+f12), in one communication frame including the R/W request signal and the CW signal.

According to such a configuration, the transmission frequency is converted in one communication frame. Therefore, the one communication frame is transmitted once, whereby it is possible to perform the aforementioned distance measurement.

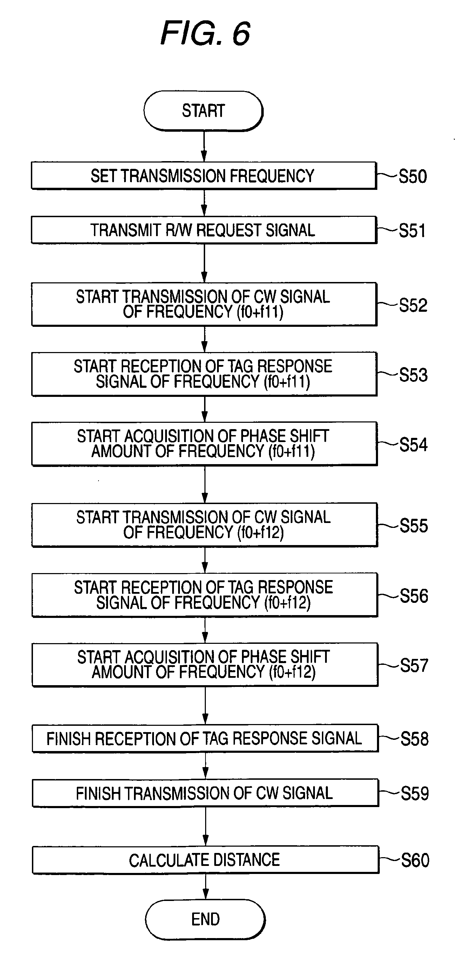

Fig. 6 is a flowchart illustrating processing at the time of measuring a distance in a manner of switching the transmission frequency in one communication frame. Hereinafter, the processing of measuring a distance will be described with reference to the flowchart.

In the following description of the process, for convenience sake of the description, it is assumed that the frequency f1 of the quadrature signals generated by the baseband signal generator 6 includes different two frequencies such as (f11) and (f12), the first transmission frequency f1 is a frequency (f0+f11) obtained by adding the frequency (f0) of the oscillator 11 to the frequency (f11) of the quadrature signals, and the second transmission frequency f2 is a frequency (f0+f12) obtained by adding the frequency (f0) of the oscillator 11 to the frequency (f12) of the quadrature signals,

Starting the distance measuring processing according to the present manner, the frequency controller 7 sequentially sets frequencies of the quadrature signals such as (f11) and (f12) to the baseband signal generator 6 (Step S50).

Then, the baseband signal generator 6 generates I signal and Q signal from the digital data streams of the R/W request signal, and the generated I signal and the Q signal are input to the quadrature mixer 14 through the D/A converters 12A and 12B, and the low pass filter 13A and 13B, respectively. The signal obtained by modulating the carrier wave on the basis of the input I signal and Q signal, that is, the R/W request signal passes from the quadrature mixer 14 through the amplifier 15 and the band pass filter 16, and the signal is transmitted from the transmission antenna 10 to the outside (Step S51).

Subsequently, the baseband signal generator 6 generates a quadrature signals of the set first frequency, that is, the quadrature signals of the first frequency (f11) such as $\mathrm{Sin}(2\pi f11 \cdot t)$ and $\mathrm{Cos}(2\pi f11 \cdot t)$. The quadrature signals of the frequency (f11) is similarly input to the mixer 14, as the I signal and the Q signal. The signal obtained by modulating the carrier wave of the frequency (f0) on the basis of the input I signal and Q signal, that is, the CW signal of the first transmission frequency such as (f0+f11) is similarly transmitted from the transmission antenna 10 to the outside (Step S52).

The RFID tag 2 receives the R/W request signal transmitted as described above, and the RFID tag 2 replies the tag response signal at the transmission frequency (f0+f11) of the subsequently received CW signal.

Meanwhile, in the RFID reader/writer 1, the tag response signal of the first transmission frequency (f0+f11) is received by the transmission antenna 17, the tag response signal is input to the receiver 9. The receiver 9 detects a preamble portion of the input tag response signal and starts a reception processing of the tag response signal, and a reception I signal and a reception Q signal are generated from the tag response signal (reception signal) (Step S53).

The distance measure 5 acquires a phase shift amount $\phi1$ of the signal of the first transmission frequency (f0+f11) on the basis of the reception I signal, the reception Q signal, and Equation 6 (Step S54),

When a prescribed time period elapses after transmitting the CW signal of the first transmission frequency (f0+f11), the baseband signal generator 6 generates a quadrature signals of the set next frequency, that is, a quadrature signals of the next frequency (f12) such as $Sin(2\pi f12 \cdot t)$ and $Cos(2\pi f12 \cdot t)$. The quadrature signals of the frequency (f12) is similarly input to the quadrature mixer 14, as the I signal and the Q signal. The signal obtained by modulating the carrier wave of the frequency (f0) on the basis of the input I signal and Q signal, that is, the CW signal of the second transmission frequency such as (f0+f11) is similarly transmitted from the transmission antenna 10 to the outside (Step S55).

When the RFID tag 2 receives the R/W request signal transmitted at the second transmission frequency (f0+f12) as described above, the RFID tag 2 replies the tag response signal at the second transmission frequency (f0+f12).

Meanwhile, in the RFID reader/writer 1, the tag response signal of the second transmission frequency (f0+f12) is received by the transmission antenna 17, the tag response signal is input to the receiver 9. The receiver 9 generates a reception I signal and a reception Q signal from the input tag response signal (reception signal) (Step S56).

The distance measure 5 acquires a phase shift amount $\phi2$ of the signal of the second transmission frequency (f0+f12) on the basis of the reception I signal, the reception Q signal, and Equation 6 (Step S57).

Then, in the RFID reader/writer 1, the reception processing of the tag response signal is finished (Step S58), the transmission of the CW signal is stopped (Step S59), and the communication using one communication is finished. The distance measure 5 calculates a distance "r" on the basis of the two phase shift amounts $\phi1$ and $\phi2$ acquired above and Equation 7 (Step S60), and a series of the distance measuring processing is finished.

Fig. 7A is a flowchart illustrating processing of the transmitter 8 of the RFID reader/writer 1, and Fig. 7B is a flowchart illustrating processing of the receiver 9 of the RFID reader/writer 1.

For example, the RFID reader/writer 1 starts the processing shown in Fig. 7A when a power switch thereof is turned on. First of all, the RFID reader/writer 1 performs a carrier sensing (Step S10) and determines a using channel (Step S11). Then, the RFID reader/writer 1 determines whether the determined using channel is LSB or not (Step S12).

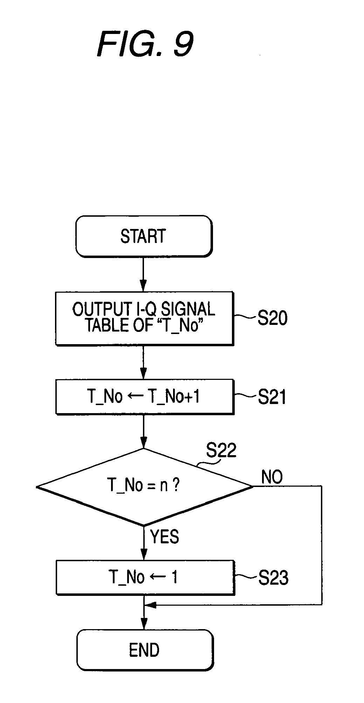

In Step S12, when it is determined that the using channel is the LSB, a series of the processing shown in Fig. 9 is performed in the baseband signal generator 6, thereby generating and outputting quadrature signals of a frequency (f1) such as $-Sin(2\pi f1 \cdot t)$ and $+Cos(2\pi f1 \cdot t)$, as the I signal and the Q signal. The quadrature signals of the frequency (f1) as the I signal and the Q signal pass through the D/A converters 12A and 12B, and the low pass filters 13A and 13B, respectively, and the signals are output to the quadrature mixer 14 (Step S13).

Alternatively, in Step S12, when it is determined that the using channel is not the LSB, that is, USB, a series of the processing shown in Fig. 9 is performed in the baseband signal generator 6, thereby generating and outputting quadrature signals of the frequency (f1) such as $+Sin(2\pi f1 \cdot t)$ and $+Cos(2\pi f1 \cdot t)$, as the I signal and the Q signal. The quadrature signals of the frequency (f1) as the I signal and the Q signal are similarly output to the quadrature mixer 14 (Step S14).

Then, it is determined whether the reception processing is finished or not. When the reception processing is finished, the processing shown in Fig. 7A is finished. However, when the reception processing is not finished, the processing returns to Step S12 and then the aforementioned generation of the I signal and the Q signal is continued up to the completion of the reception processing (Steps S12 to S15).

When the signals of $-Sin(2\pi f1 \cdot t)$ and $+Cos(2\pi f1 \cdot t)$ output in Step S14 are input to the quadrature mixer 14 as the I Signal and the Q signal, the carrier wave of the frequency (f0) output from the oscillator 11 is modulated on the basis of the I signal and the Q signal. The carrier wave of the frequency (f0-f1) as the modulated signal is obtained, and the transmission signal of the frequency (f0-f1) is output from the transmission antenna 10.

Alternatively, when the signals of $+Sin(2\pi f1 \cdot t)$ and $+Cos(2\pi f1 \cdot t)$ output in Step S14 is input to the quadrature mixer 14 as the I Signal and the Q signal, the carrier wave of the frequency (f0+f1) is obtained as the modulated signal, and the transmission signal of the frequency (f0+f1) is output from the transmission antenna 10.

As described above, when the transmission signal of the frequency (f0-f1) or (f0+f1) is output from the RFID reader/writer 1, electric power is supplied to the RFID tag 2 and thus the RFID tag 2 can transmit the tag response signal. Meanwhile, the RFID reader/writer 1 receives the tag response signal transmitted from the RFID tag 2, by the reception antenna 17. The processing shown in Fig. 7B is performed by the transmitter 8. That is, a preamble portion is detected from the received tag response signal (Step S30), a demodulation processing of the tag response signal is performed (Step S31), it is determined whether the reception is finished or not (Step S32). When it is determined that the reception is finished, the processing shown in Fig. 7B is finished. However, when it is determined that the reception is not finished, the processing returns to Step S31.

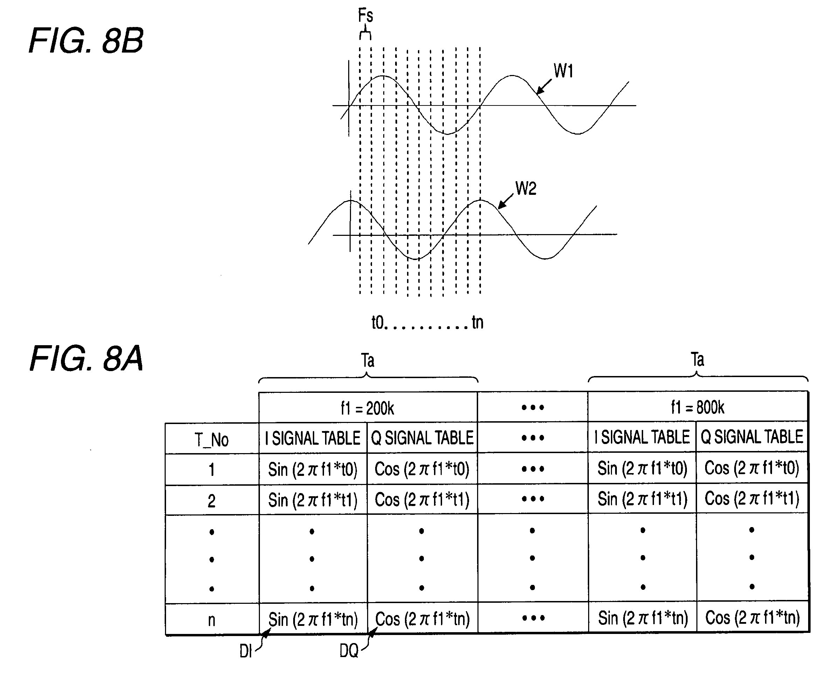

Fig. 8A is a diagram illustrating an example of an I-Q signal table used for generating and outputting the I signal and the Q signal in the baseband signal generator 6.

The I-Q signal table Ta shown in Fig. 8A is provided for each frequency such as 200 kHz, 400 kHz, 600 kHz, and 800 kHz, and the I signal data DI and Q signal data DQ necessary for generating the I signal and the Q signal of each frequency are stored therein. For example, the I-Q signal table Ta is provided in a storage (not shown) of the baseband signal generator 6.

The I signal data DI and the Q signal data DQ in the I-Q signal table are obtained by sampling a Sin waveform W1 and a Cos waveform W2 shown in Fig. 8B at a sampling interval defined by a prescribed sampling frequency. For example, the I signal data and the Q signal data such as $Sin(2\pi f1 \cdot t0)$ and $Cos(2\pi f1 \cdot t0)$ stored in "T_No = 1" of the I-Q signal table Ta are the amplitude at the time of sampling the Sin waveform and the Cos waveform of the frequency f1 (f1=200kHz, 400kHz, 600kHz, and 800KHz) at time t0.

A series of processing shown in Fig. 9 shows processing of generating the I signal and the Q signal including the quadrature signals of the frequency (f1) such as $Sin(2\pi f1 \cdot t0)$ and $Cos(2\pi f1 \cdot t0)$, on the basis of the aforementioned I-Q signal table shown in Fig. 8A.

According to the processing shown in Fig. 9, when the I signal and the Q signal of 200 kHz are generated, the I-Q signal table Ta of f1=200 kHz is first selected, and the I signal data and the Q signal data stored in "T_No = 1" of the I-Q signal table are output to the D/A converters 12A and 12B (Step S20).

Next, 1 is added to "T_No = 1" to be "T_No = 2" (Step S21), and it is determined whether "T_No = n" or not (Step S22).

In Step S22, when it is determined that "T_No = n", it is initialized into 1, that is, "T_No = 1" (Step S23), and then a series of the processing shown in Fig. 9 is finished. Alternatively, when it is determined that "T_No = n" is not, a series of the processing shown in Fig. 9 is similarly finished. After a series of the processing shown in Fig. 9, the processing is transferred to Step S15.

Accordingly, a series of the processing (Steps 20 to 23) is repeated as a subroutine of Step S13 or Step S14 in the same figure, until the processing is determined as the reception completion in Step S15 shown in Fig. 7.

When the tag response signal is received from the RFID tag 2, the I signal data DI and the Q signal DQ in the I-Q signal table Ta are output in an order of "T_No = 1, 2 ... n", from the baseband signal generator 6 to the D/A converters 12A and 12B, and I signal and Q signal composed of the quadrature signals of the frequency (f1) such as $Sin(2\pi f1 \cdot t)$ and $Cos(2\pi f1 \cdot t)$ are generated.

In addition, the I-Q signal table Ta in Step S20 is selected on a control signal output from the frequency controller 7. For example, when I signal and Q signal of 200 kHz are generated and output as described in the aforementioned example, a setting value such as 200 kHz is output as a control signal from the frequency controller 7 to the baseband signal generator 6. Accordingly, the I-Q signal table Ta of f1=200 kHz is selected, and I signal and Q signal of 200 kHz are generated and output.

In this case, the frequency (f0) of the oscillator 11 is 953.1 MHz, a frequency (transmission frequency) of the transmission signal output from the transmission antenna 10 of the RFID reader/writer 1 becomes 953.3 MHz or 952.9 MHz from Equation 1 or Equation 2.

At the time of switching the transmission frequency of the RFID reader/writer 1, as a control signal from the frequency controller 7 to the baseband signal generator 6, a setting value (any one selected from 200kHz, 400kHz, 600kHz, and 800KHz in the embodiment) of the frequency (f1) at a prescribed timing is output For example, when a frequency setting value of 400 kHz as such a control signal is output, the transmission frequency is converted into 953.5 MHz or 952.7 MHz from Equation 1 or Equation 2 described above.

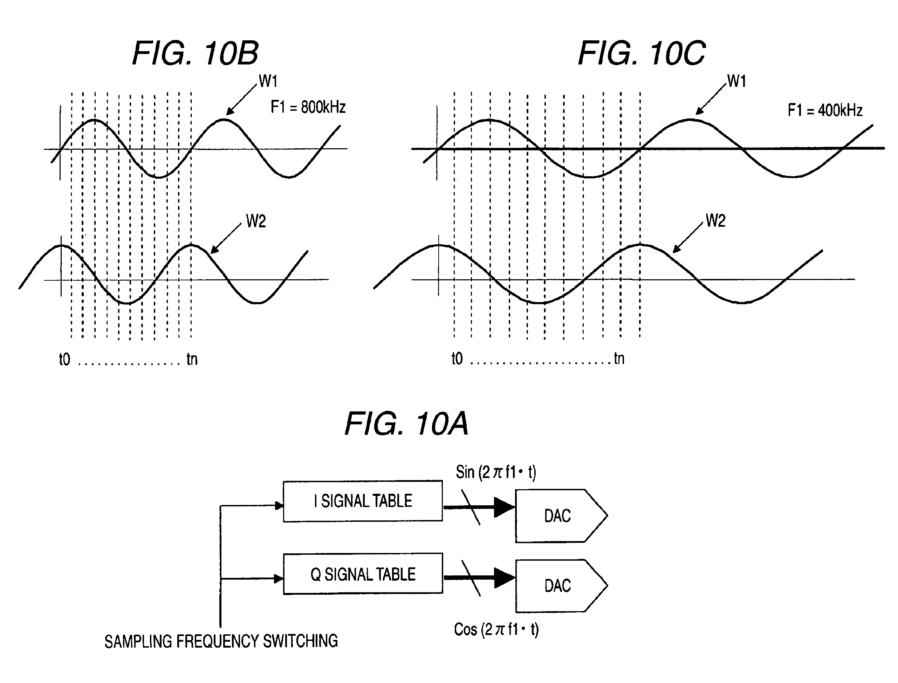

As another manner of switching the transmission frequency, a Sin signal table and a Cos signal table for outputting a Sin signal and a Cos signal may be used as the I signal table and the Q signal table shown in Fig. 10A, and a sampling frequency thereof may be converted to change.

In this manner, as shown in Figs. 10B and 10C, a sampling interval Fs of the Sin signal and the Cos signal is shortened or extended by switching a sampling frequency. In addition, a Sin signal W1 and a Cos signal W2 of 800 kHz as shown in Fig. 10B are generated, or a Sin signal W1 and a Cos signal W2 of 400 kHz as shown in Fig. 10C are generated.

For example, when the Sin signal W1 and the Cos signal W2 of 800 kHz as shown in Fig. 10B are input as the I signal and the Q signal through the D/A converters 12A and 12B and the low pass filters 13A and 13B to the quadrature mixer 14 by switching the sampling frequency, a transmission frequency of 953.1 MHz is obtained on the basis of Equation 1. In addition, when the Sin signal W1 and the Cos signal W2 of 400 kHz as shown in Fig. 10C are similarly input to the quadrature mixer 14 by switching the sampling frequency, the transmission frequency is converted into 952.7 MHz on the basis of the Equation 1.

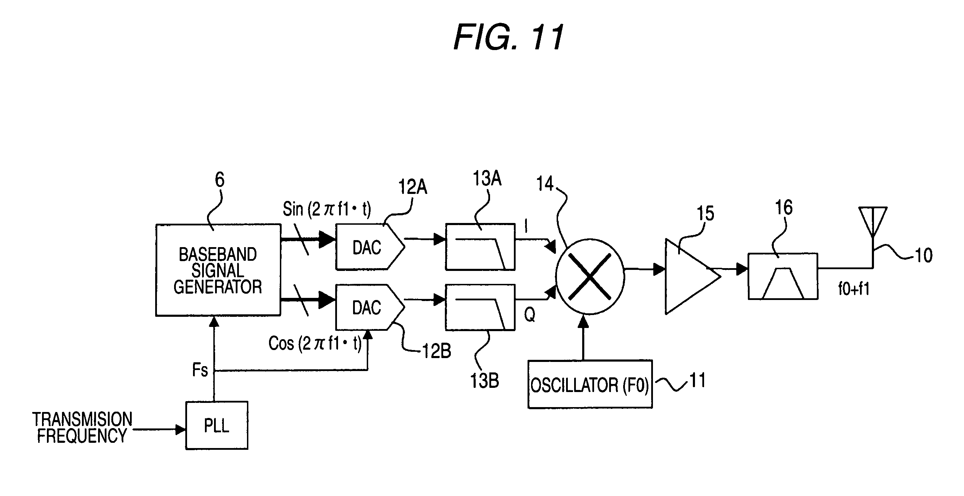

The generation and conversion of the sampling frequency as described above may employ a manner using a low-frequency PLL circuit as shown in Fig. 11 or a manner using a frequency dividing circuit as shown in Fig. 12, but are not limited to these manners.

Although only some exemplary embodiments of the invention have been described in detail above, those skilled in the art will readily appreciated that many modifications are possible in the exemplary embodiments without materially departing from the novel teachings and advantages of the invention. Accordingly, all such modifications are intended to be included within the scope of the invention.

The disclosure of Japanese Patent Application No. 2007-33977 filed February 14. 2007 including specification, drawings and claims is incorporated herein by reference in its entirety.

**Claims**

1. A frequency switcher, comprising:

   a modulator, operable to modulate a carrier wave with quadrature signals including a Sin signal and a Cos signal which serve as an I signal and a Q signal;
   a frequency controller, operable to control frequencies of the quadrature signals to switch a transmission frequency of the carrier wave; and
   a transmitter, operable to transmit the modulated carrier wave with the switched transmission frequency.

2. The frequency switcher as set forth in claim 1, further comprising:

   an I-Q signal table, storing a plurality of data sets each of which includes I signal data and Q signal data which are configured to be used to generate the I signal and the Q signal of an associated one of a plurality of transmission frequencies, wherein:

   the frequency controller is operable to switch the data sets in order to switch the transmission frequency.

3. The frequency switcher as set forth in claim 1, further comprising:

   a first table, storing data for generating the Sin signal: and
   a second table, storing data for generating the Cos signal, wherein:

   the frequency controller is operable to generate a sampling frequency for sampling the Sin signal and the Cos signal, and operable to switch the sampling frequency in order to switch the transmission frequency.

4. The frequency switcher as set forth in claim 3, wherein:

   the frequency controller includes a low-frequency PLL circuit.

5. The frequency switcher as set forth in claim 3, wherein:

   the frequency controller includes a frequency divider.

6. An RFID system, comprising:

   an RFID tag; and
   a reader/writer, comprising:

   a modulator, operable to modulate a carrier wave with quadrature signals including a Sin signal and a Cos signal which serve as an I signal and a Q signal;
   a frequency controller, operable to control frequencies of the quadrature signals to switch a transmission frequency of the carrier wave; and
   a transmitter, operable to transmit, to the RFID tag, the modulated carrier wave with the switched transmission frequency.

7. The RFID system as set forth in claim 6, wherein:

the frequency controller is operable to switch the transmission frequency for each of a single communication frame for transmitting a read/write request signal and a CW signal associated with one transmission frequency.

8. The RFID system as set forth in claim 6, wherein:

the frequency controller is operable to switch the transmission frequency within a single communication frame for transmitting a read/write request signal and CW signals associated with switched transmission frequencies.

9. An RFID system, comprising:

an RFID tag; and
a reader/writer, comprising:

a modulator, operable to modulate a carrier wave with quadrature signals including a Sin signal and a Cos signal which serve as an I signal and a Q signal;
a frequency controller, operable to control frequencies of the quadrature signals to switch a transmission frequency of the carrier wave between a first frequency and a second frequency;
a transmitter, operable to transmit, to the RFID tag, the modulated carrier wave with the switched transmission frequency;
a first receiver, operable to acquire a first phase shift amount of a first response signal which is transmitted from the RFID tag in response to the modulated carrier wave having the first frequency;
a second receiver, operable to acquire a second phase shift amount of a second response signal which is transmitted from the RFID tag in response to the modulated carrier wave having the second frequency; and
a distance calculator, operable to calculate a distance between the reader/writer and the RFID tag with reference to the first frequency, the second frequency, the first phase shift amount and the second phase shift amount.

10. The RFID system as set forth in claim 9, wherein:

the frequency controller is operable to switch the transmission frequency for each of a single communication frame for transmitting a read/write request signal and a CW signal associated with either the first frequency or the second frequency.

11. The RFID system as set forth in claim 9, wherein:

the frequency controller is operable to switch the transmission frequency within a single communication frame for transmitting a read/write request signal and CW signals associated with the first frequency and the second frequency.

*FIG. 1*

EP 1 959 578 A2

## FIG. 2

■LSB
-Sin(2 π f1 · t)/Cos(2 π f1 · t)
f1=200k/400k/600k/800k

f0

■USB
Sin(2 π f1 · t)/Cos(2 π f1 · t)
f1=200k/400k/600k/800k

952.2  952.4  952.6  952.8  953.0  953.2  953.4  953.6  953.8

952.0MHz

200kHz

954.0MHz

MISTUNED FREQUENCY
600kHz

## FIG. 3

14

I SIGNAL    i (t)    14B

CARRIER WAVE
FREQUENCY

11

14A

90° PHASE
SHIFTER

14D

Σ    S (t)    MODULATED
OUTPUT

14C

Q SIGNAL    q (t)

EP 1 959 578 A2

# FIG. 4A

COMMUNICATION FRAME F

| REQUEST SIGNAL | CW SIGNAL |
|---|---|

# FIG. 4B

TAG RESPONSE SIGNAL

| PREAMBLE PORTION | DATA PORTION |
|---|---|

15

# FIG. 5

START

SET TRANSMISSION FREQUENCY ~S40

TRANSMIT R/W REQUEST SIGNAL ~S41

START TRANSMISSION OF CW SIGNAL ~S42

START RECEPTION OF TAG RESPONSE SIGNAL ~S43

START ACQUISITION OF PHASE SHIFT AMOUNT ~S44

FINISH RECEPTION OF TAG RESPONSE SIGNAL ~S45

FINISH ACQUISITION OF PHASE SHIFT AMOUNT ~S46

FINISH TRANSMISSION OF CW SIGNAL ~S47

S48
TAG RESPONSE SIGNALS FOR ALL FREQUENCIES ARE RECEIVED?

NO

YES

CALCULATE DISTANCE ~S49

END

## FIG. 6

```
                    ┌──────────┐
                    │  START   │
                    └────┬─────┘
                         │
         ┌───────────────▼────────────────┐
         │   SET TRANSMISSION FREQUENCY    │───S50
         └───────────────┬────────────────┘
                         │
         ┌───────────────▼────────────────┐
         │   TRANSMIT R/W REQUEST SIGNAL   │───S51
         └───────────────┬────────────────┘
                         │
         ┌───────────────▼────────────────┐
         │  START TRANSMISSION OF CW SIGNAL│───S52
         │     OF FREQUENCY (f0+f11)       │
         └───────────────┬────────────────┘
                         │
         ┌───────────────▼────────────────┐
         │  START RECEPTION OF TAG RESPONSE│───S53
         │    SIGNAL OF FREQUENCY (f0+f11) │
         └───────────────┬────────────────┘
                         │
         ┌───────────────▼────────────────┐
         │  START ACQUISITION OF PHASE SHIFT│───S54
         │   AMOUNT OF FREQUENCY (f0+f11)  │
         └───────────────┬────────────────┘
                         │
         ┌───────────────▼────────────────┐
         │  START TRANSMISSION OF CW SIGNAL│───S55
         │     OF FREQUENCY (f0+f12)       │
         └───────────────┬────────────────┘
                         │
         ┌───────────────▼────────────────┐
         │  START RECEPTION OF TAG RESPONSE│───S56
         │    SIGNAL OF FREQUENCY (f0+f12) │
         └───────────────┬────────────────┘
                         │
         ┌───────────────▼────────────────┐
         │  START ACQUISITION OF PHASE SHIFT│───S57
         │   AMOUNT OF FREQUENCY (f0+f12)  │
         └───────────────┬────────────────┘
                         │
         ┌───────────────▼────────────────┐
         │ FINISH RECEPTION OF TAG RESPONSE SIGNAL │───S58
         └───────────────┬────────────────┘
                         │
         ┌───────────────▼────────────────┐
         │  FINISH TRANSMISSION OF CW SIGNAL│───S59
         └───────────────┬────────────────┘
                         │
         ┌───────────────▼────────────────┐
         │      CALCULATE DISTANCE         │───S60
         └───────────────┬────────────────┘
                         │
                    ┌────▼─────┐
                    │   END    │
                    └──────────┘
```

## FIG. 7A

START

EXECUTE CARRIER SENSING — S10

DETERMINE USING CHANNEL — S11

S12
DETERMINED CHANNEL IS LSB ?

— NO →

YES ↓ S13

OUTPUT QUADRATURE SIGNALS OF $-\mathrm{Sin}\,(2\pi\,\mathrm{f1\cdot t})$ AND $\mathrm{Cos}\,(2\pi\,\mathrm{f1\cdot t})$

S14
OUTPUT QUADRATURE SIGNALS OF $\mathrm{Sin}\,(2\pi\,\mathrm{f1\cdot t})$ AND $\mathrm{Cos}\,(2\pi\,\mathrm{f1\cdot t})$

S15
RECEPTION PROCESSING AT RECEIVER IS FINISHED?

NO

YES ↓

END

## FIG. 7B

START

DETECT PREAMBLE PORTION OF TAG RESPONSE SIGNAL — S30

EXECUTE DEMODULATION — S31

S32
RECEPTION OF TAG RESPONSE SIGNAL IS FINISHED?

NO

YES ↓

END

EP 1 959 578 A2

EP 1 959 578 A2

## FIG. 8B

t0 . . . . . . . . . . tn

## FIG. 8A

| T_No | f1 = 200k | | ••• | f1 = 800k | |
|---|---|---|---|---|---|
| | I SIGNAL TABLE | Q SIGNAL TABLE | ••• | I SIGNAL TABLE | Q SIGNAL TABLE |
| 1 | $\mathrm{Sin}(2\pi f1 * t0)$ | $\mathrm{Cos}(2\pi f1 * t0)$ | ••• | $\mathrm{Sin}(2\pi f1 * t0)$ | $\mathrm{Cos}(2\pi f1 * t0)$ |
| 2 | $\mathrm{Sin}(2\pi f1 * t1)$ | $\mathrm{Cos}(2\pi f1 * t1)$ | ••• | $\mathrm{Sin}(2\pi f1 * t1)$ | $\mathrm{Cos}(2\pi f1 * t1)$ |
| • | • | • | • | • | • |
| • | • | • | • | • | • |
| • | • | • | • | • | • |
| n | $\mathrm{Sin}(2\pi f1 * tn)$ | $\mathrm{Cos}(2\pi f1 * tn)$ | ••• | $\mathrm{Sin}(2\pi f1 * tn)$ | $\mathrm{Cos}(2\pi f1 * tn)$ |

# FIG. 9

```
        ┌──────────────┐
        │    START     │
        └──────────────┘
               │
               ▼
      ┌──────────────────┐
      │ OUTPUT I-Q SIGNAL │──S20
      │ TABLE OF "T_No"   │
      └──────────────────┘
               │
               ▼
      ┌──────────────────┐
      │  T_No ← T_No+1   │──S21
      └──────────────────┘
               │
               ▼          S22
            ◇──────────◇   NO
           ◇  T_No = n ? ◇────┐
            ◇──────────◇      │
               │ YES          │
               ▼              │
      ┌──────────────────┐    │
      │   T_No ← 1       │──S23│
      └──────────────────┘    │
               │◄─────────────┘
               ▼
        ┌──────────────┐
        │     END      │
        └──────────────┘
```

## FIG. 10B

W1
F1 = 800kHz

W2

t0 ............... tn

## FIG. 10C

W1
F1 = 400kHz

W2

t0 ..................... tn

## FIG. 10A

$Sin(2\pi f1 \cdot t)$

I SIGNAL TABLE → DAC

Q SIGNAL TABLE → DAC

SAMPLING FREQUENCY SWITCHING

$Cos(2\pi f1 \cdot t)$

EP 1 959 578 A2

## FIG. 11

EP 1 959 578 A2

FIG. 12

FIG. 13

FIG. 14

FIG. 15A

FIG. 15B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006095463 W
- JP 2007033977 A